(19) **Europäisches Patentamt**
**European Patent Office**
**Office européen des brevets**

(11) **EP 3 235 700 B1**

(12) **EUROPEAN PATENT SPECIFICATION**

(45) Date of publication and mention
of the grant of the patent:
**27.10.2021 Bulletin 2021/43**

(51) Int Cl.:
***B60W 40/09*** *(2012.01)*

(21) Application number: **17162835.7**

(22) Date of filing: **24.03.2017**

(54) **SYSTEM AND METHOD OF ESTIMATING AN INDICATION OF THE DRIVING STYLE OF A MOTOR VEHICLE**

SYSTEM UND VERFAHREN ZUR SCHÄTZUNG EINER ANZEIGE DES FAHRSTILS EINES KRAFTFAHRZEUGS

SYSTÈME ET PROCÉDÉ D'ESTIMATION D'UNE INDICATION DU STYLE DE CONDUITE D'UN VÉHICULE AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2016 IT UA20162368**

(43) Date of publication of application:
**25.10.2017 Bulletin 2017/43**

(73) Proprietor: **Drive2go S.r.l.**
**20122 Milano (MI) (IT)**

(72) Inventors:
• **BOTTELLI, Stefano**
**I-21100 VARESE (IT)**

• **TESTA, Andrea**
**I-20090 MONZA (IT)**
• **BONIOLO, Ivo Emanuele Francesco**
**I-20122 MILANO (IT)**

(74) Representative: **Gregorj S.r.l.**
**Via L. Muratori, 13/b**
**20135 Milano (IT)**

(56) References cited:
**EP-A1- 1 498 297      EP-A1- 2 353 959**
**WO-A1-2010/013826      WO-A1-2011/101713**
**DE-A1-102006 032 768      FR-A1- 2 976 888**

**Description**

**Technical field of the invention**

The present invention refers to techniques for estimating the driving style of a motor vehicle adopted by a driver.

**Prior art**

Different techniques of estimating the driving style of motor vehicle drivers to be used with reference to an estimate of the fuel consumption, safety of the driver behavior, or for generally evaluating his/her driving capabilities, are known.

Document WO-2011-101713 describes a method of estimating the driving style based on calculating an index obtained by the ratio between the difference of an energy consumed by the motor vehicle and a reference energy, and the reference energy itself.

Application EP-A-1780090 describes a method for defining the driving style of a motor vehicle driver, which comprises monitoring different magnitudes, among them: how many times the horn is used, the speed variation, the accelerator position variation, the angular speed obtained by the movements of the driving wheel. Then, the estimate is based on calculating the differences between these monitored magnitudes and predetermined threshold values.

Patent application EP-A-0777071 describes a method of controlling the automatic transmission of a vehicle as a function of the driving style of the driver based, among the other things, on the following information: opening of the fuel valve, vehicle speed, angular speed of the engine.

Patent application EP-A-1498297 describes a method of estimating the fuel consumption which instrumental in monitoring different magnitudes, among them there are: a signal of the rotation speed of the motive wheel, a signal of the rotation speed of the driving shaft, a cooling temperature signal, a fuel temperature signal.

**Brief summary of the invention**

The Applicant has noted that the standard techniques of estimating the driving style are not satisfying because sometimes they do not enable to distinguish possible different behaviors of the drivers of a vehicle.

The object of the present invention is to provide a technique for estimating the driving style of motor vehicles which is adequately reliable.

The object of the present invention is met by a system for estimating the driving style as defined in claim 1. Preferred embodiments are defined in the dependent claims from 2 to 9. It is also an object of the invention a method of estimating the driving style as defined in claim 10.

**Brief description of the drawings**

Further characteristics and advantages of the invention will result from the following description of a preferred embodiment and variants thereof illustratively given with reference to the attached drawings, wherein:

Figure 1 schematically shows an example of a system for estimating the driving style of a driver of a motor vehicle;
Figure 2a) shows the trend of the measured speed and reference speed with respect to a first driving example of a motor vehicle;
Figure 2b) shows the trend of the measured speed and reference speed with respect to a second driving example of a motor vehicle.

**Description of the embodiments of the invention**

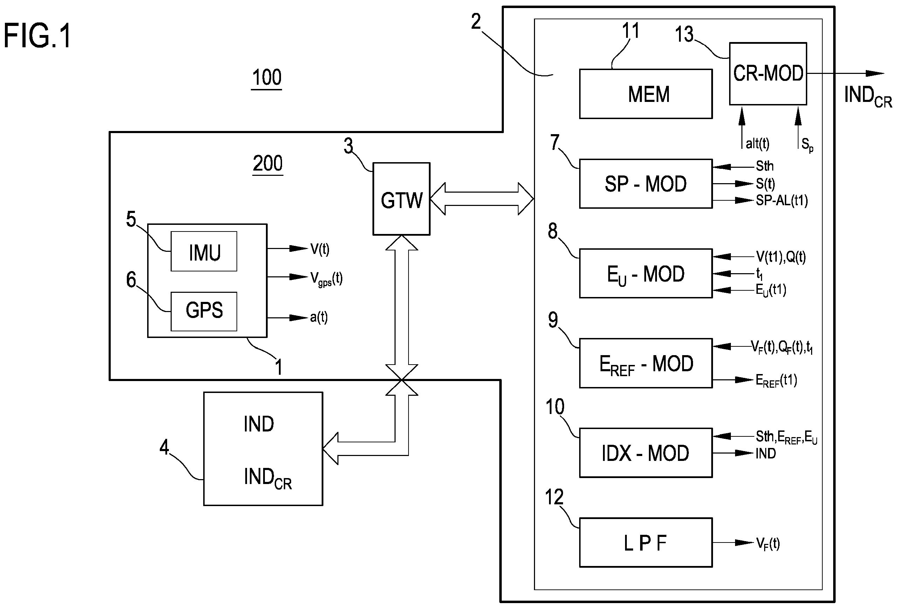

Figure 1 shows an example of a system 100 for estimating the driving style of a driver of a motor vehicle. Particularly, the estimating system 100 comprises a measuring apparatus 1 and a processing apparatus 2 adapted to communicate with each other. Specifically, the estimating system 100 is also provided with a gateway device 3 (GTW) and with at least one presentation or report device 4 showing the results of the performed estimate.

Preferably, the measuring apparatus 1 is mounted on the motor vehicle and enables to provide electric signals, particularly digital signals, representative of cinematic magnitudes associated to the motion of the motor vehicle itself. The digital signals supplied by the measuring apparatus 1 can be a signal of the speed of the motor vehicle and, for example, also an acceleration signal of the motor vehicle itself. As an alternative, the measuring apparatus 1 can supply electric signals in an analog form which can be digitally converted for enabling, for example, numerical processings executed by a software.

According to a particular embodiment, the measuring apparatus 1 can comprise a speed transducer and acceleration transducer of the motor vehicle. To this purpose, the signals acquisition apparatus 1 is provided, for example, with an inertial measuring system 5 (IMU), per se known (known in the field as "inertial platform"), which comprises a computer and motion sensors adapted to supply the acceleration and speed signals (in terms of direction, sense and amplitude) of the motor vehicle.

Moreover, advantageously, the measuring apparatus 1 can be also provided with a positioning device 6 (GPS) such as a receiver operating in a satellite positioning system such as, particularly, the GPS (Global Positioning System). The receiver GPS 6 is capable of supplying, in addition to the motor vehicle position, also an associated speed signal.

With reference to the processing apparatus 2, this is, according to an embodiment, a data processing unit or a computer (provided with memories, computing units and interfaces communicating with the outer environment) adapted to receive the signals from the measuring apparatus 1 and to execute computing and processing operations for estimating the driving style of a particular driver of the motor vehicle. The processing apparatus 2 particularly comprises a microcontroller.

According to the schematic view in Figure 1, the data processing unit 2 comprises the following modules (of a software type, for example): a space computing module 7 (SP-MOD), a consumed energy computing module 8 (Eu-MOD), a reference energy computing module 9 ($E_{REF}$-MOD), and an index computing module 10 (IDX-MOD).

Particularly, the space computing module 7 is configured for calculating the space (i.e. a distance) travelled by the motor vehicle along a measuring path. The consumed energy computing module 8 is configured for estimating an energy Eu consumed by the motor vehicle along the measuring path.

Moreover, the reference energy computing module 9 is configured for estimating a reference energy $E_{REF}$ associated to a reference (or ideal) behavior of the motor vehicle along the measuring path.

The index computing module 10 is configured for providing an index IND of the driving style of the motor vehicle. Particularly, the index computing module 10 calculates such index IND based on a difference between the used energy Eu and reference energy $E_{REF}$ and considering the travelled space.

Moreover, the data processing unit 2 comprises, for example, a measured data memory 11 (MEM) and a low-pass filtering module 12 (LPF).

The data processing unit 2 can be mounted in the vehicle or can be remote from it and placed, for example, in a monitoring station.

Particularly, the data processing unit 2, measuring unit 1 and gateway 3 can be integrated in a single apparatus 200 which, preferably, implements a control unit mounted to the motor vehicle.

The gateway 3 ensures the communication between the apparatus 200, particularly the data processing unit 2, and the one or more report modules 4. For example, if the report module 4 is a smartphone or another mobile device, the gateway 3 ensures the communication by using a short range transmission (wireless based on the Wi-Fi, Bluetooth technology, for example). Particularly, when the report module 4 is a web-console, it exchanges data/information with the apparatus 200 by using a long range transmission (based on the GPRS, UMTS, LTE technologies, for example). According to another example, if the report module 4 is a device mounted to the motor vehicle, it can be connected by wiring to the apparatus 200. The estimating system 100 can comprise more than one report module 4: at least one smartphone and/or at least one web-console and/or at least one device mounted to the motor vehicle.

In any case, the report device 4 comprises, preferably, a display adapted to show information enabling the driver or other users to know the result of the estimate of the driving style.

According to another example, when the data processing unit 2 is placed remotely from the measuring unit 1, the connection between the measuring unit 1 and data processing unit 2 can be ensured by the gateway 3, by using a low range or long range transmission technology according to the distance between the two apparatuses.

An example of an operation of the driving style estimating system 100 will be now described. A threshold value of the space $S_{th}$ for estimating the driving style is defined. The index IND representative of the driving style preferably will be calculated by considering values of the consumed energy Eu and of the reference energy $E_{REF}$ corresponding to a path travelled by the motor vehicle, equal to the space threshold value $S_{th}$.

The space computing module 7 detects, based on signals from the measuring apparatus 1, when the motor vehicle has travelled a space equal to the threshold value $S_{th}$. The threshold value $S_{th}$ can be of 2 km, for example.

Particularly, for this evaluation, the space computing module 7 uses a first speed signal $v_{gps}(t)$, provided by the GPS 6. For example, the space computing module 7 periodically integrates over time the first speed signal $v_{gps}(t)$ for obtaining a current value of the space $s(t)$.

The calculation of the current space value $s(t)$, in the Laplace domain, can be expressed by:

$$S(s) = 1/s\ V_{gps}(s) \qquad (1)$$

Particularly, formula (1) can be calculated by the data processing unit 2 by a Tustin transformation (per se known to the person skilled in the art) on signals sampled, for example, at 10 Hz.

When the current space value $s(t)$ is equal to the threshold value $S_{th}$, the space computing module 7 communicates such event, for example, to the index computing module 10, as an alert signal SP-AL.

The consumed energy computing module 8 performs an energy estimate $Eu(t)$ consumed by the motor vehicle along a path of length $S_{th}$ by using a speed signal $v(t)$. For example, the speed signal $v(t)$ is obtained by the measuring apparatus 1.

With reference to the estimated energy $Eu(t)$, it is observed that the longitudinal force $F_{engine}$ provided by the motor vehicle engine, can be expressed, for example, by:

$$F_{\text{engine}}(t) = Ma(t) + F_{res} \qquad (2)$$

wherein:

- $M$: is the motor vehicle mass;
- $a(t)$: is the longitudinal acceleration of the motor vehicle;
- $F_{res}$: is the sum of the resisting forces, which are the force of the aerodynamic drag, the force of the rolling friction and the component of the gravity due to the slope of the road;
- the term $Ma(t)$ is the inertial force of the motor vehicle.

The power $P_{engine}$ provided by the engine is given by:

$$P_{\text{engine}}(t) = M\,a(t)\,v(t) + F_{res}\,v(t) \qquad (3)$$

The first term of formula (3) is the inertial power, while the second term is the power generated by the resisting forces.

According to a preferred embodiment, it is considered only the inertial term for calculating the consumed energy $Eu(t)$, so that the formula (3) has the following form:

$$P_{\text{engine}}(t) = M\,a(t)\,v(t) \qquad (4)$$

Indeed, the Applicant has observed that by considering only the inertial factor when calculating the driving style, uniform indexes of the driving style are obtained both in an urban environment and in the suburban one. Indeed, in an urban environment, the driving sessions are characterized by continuous brakings and accelerations, which account for the main portion of the consumed energy. By contrast, in a suburban environment, the energy contribution for overcoming the frictions, takes an importance comparable to the inertial contribution. Since the object of the index consists of evaluating the driver driving style, it makes sense considering only the component of the energy on which the driver has a real decisional power, in other words managing the speed and acceleration.

The estimated consumed energy $Eu(t)$ is given by the integration over time of the power in the measurement range $0$-$t1$:

$$E_U(t) = \int_0^{t1} P_{engine}(t)\,dt \qquad (5)$$

wherein the time instant t1 is when the motor vehicle travels a space equal to the threshold value $S_{th}$. Therefore, the value of the time instant t1 can be provided to the consumed energy computing module 8 by the space computing module 7.

The consumed energy computing module 8, based on formulas (3) and (5) or, preferably, (4) and (5), performs a numerical processing of the available digital data and estimates the inertial energy $E_U$ consumed by the engine of the motor vehicle.

Particularly, if the formulas (3) and (5) are used for this calculation, besides the speed signal $v(t)$ obtained by the measurement, it is also used an acceleration signal representative of the acceleration $a(t)$ which can be provided by the inertial measurement system 5 or can be obtained by a time derivative of the speed signal $v(t)$, in turn provided by the receiver GPS 6.

The reference energy computing module 9 estimates the reference energy $E_{REF}(t)$ which represents the energy the motor vehicle engine could consume when the motor vehicle is driven according to a reference trend.

For example, such reference trend of the motor vehicle is associated to a reference trend of a cinematic magnitude. Particularly, such reference cinematic magnitude can be the motor vehicle speed. Preferably, it is selected as motor vehicle speed a filtered speed $v_F(t)$ obtained by low-pass filtering the measured speed $v(t)$ obtained as a function of values provided by the receiver GPS 6.

The reference energy computing module 9 uses, for example, the following formula of the reference force:

$$F_{\text{REF-engine}}(t) = M\ a_F(t) + F_{REF-res} \qquad (6)$$

Alternatively, considering only the inertial contribution (based on considerations similar to the ones given with reference to formula (4)), is obtained:

$$F_{\text{REF-engine}}(t) = M\ a_F(t) \qquad (6a)$$

Therefore, the reference inertial power is expressed by the following formula:

$$P_{\text{REF-engine}}(t) = M\ a_F(t)\ v_F(t) \qquad (7)$$

In such formulas (6), (6a) and (7), besides the already defined parameters, there is the above cited filtered speed signal $v_F(t)$, and the derivative thereof $a_F(t)$ (i.e. an acceleration signal).

Therefore, the reference energy computing module 9 calculates the reference energy according to this formula:

$$E_{REF}(t) = \int_0^{t1} P_{REF-engine}(t)\ dt \qquad (8)$$

Wherein, the time instant t1, as already defined, is the one in which the motor vehicle travels a space equal to the threshold value $S_{th}$. Therefore, the value of the time instant t1 can be supplied to the reference energy computing module 9 by the space computing module 7.

The index computing module 10 calculates the index IND based on the difference between the consumed energy $Eu(t1)$, reference energy $E_{REF}(t1)$ and threshold value $S_{th}$. Particularly, the index computing module 10 calculates the difference between the consumed energy $E_U(t1)$ and reference energy $E_{REF}(t1)$ and divides this difference by the threshold value of the space $S_{th}$:

$$IND = \frac{(E_U(t1) - E_{REF}(t1))}{S_{th}} \qquad (9)$$

It is noted the index IND is a force, actually:

$$\frac{(E_U(t1) - E_{REF}(t1))\ [KW]}{S_{th}\ \ \ \ \ [km]} = \frac{[W]}{m} = [N] \qquad (10)$$

The index IND expressed by the formula (9), therefore supplies the average "wasted" force for travelling a space $S_{th}$ in the interval [0-t1]. Therefore, the higher such index IND it is, the "worst" is the driving style of a driver.

The processing unit 2 can make available this index IND to the report device 4 so that it can be shown also to the driver.

With reference to the timings for presenting to the driver or another observer of the estimate of the driving style, different standards can be adopted. For example, the values of the index of the driving style IND can be calculated every time the space $S_{th}$ is travelled and at each stop of the motor vehicle, the worst value (in other words the highest) among the ones obtained, is supplied.

Referring again to the style index IND given by the formula (9), it is observed that this has the advantage of expressing in a way particularly reliable, the driving style of the driver.

As a comparison, it is considered an index $IND_{PA}$ obtained by another mode for calculating the driving style, expressed by the following formula:

$$IND_{PA} = \frac{(E_U(t1) - E_{REF}(t1))}{E_{REF}(t1)} \qquad (11)$$

According to the formula (11), the numerator is the difference between the inertial energies (consumed energy $Eu(t1)$ and reference energy $E_{REF}(t1)$) and the denominator is the reference energy $E_{REF}(t1)$.

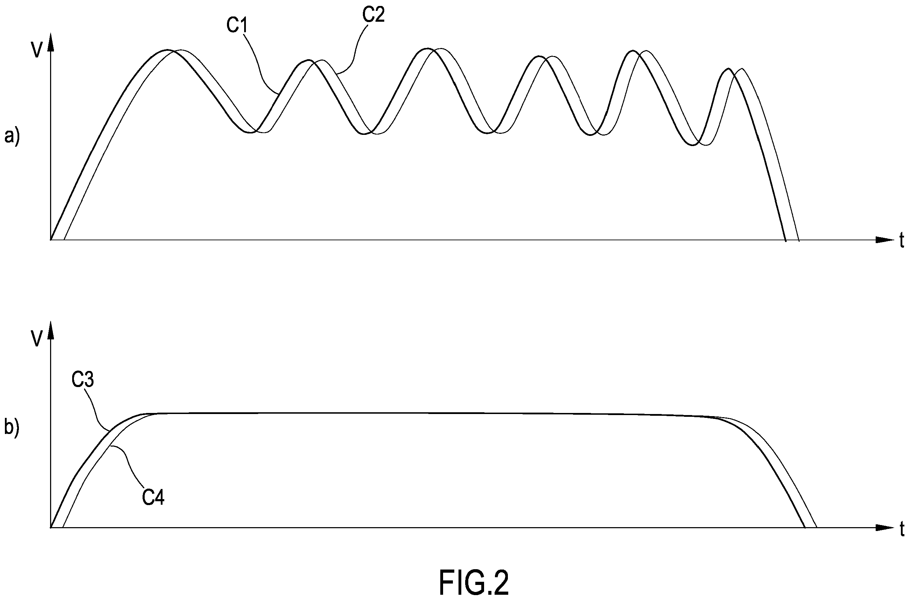

For example, the cases shown in Figures 2a) and 2b) are considered. Figure 2a) shows a first curve C1 regarding the trend of the measured speed $v(t)$ by which a motor vehicle is driven. The second curve C2 instead is the trend of the reference speed $v_{REF}(t)$, obtained by low-pass filtering the measured one.

Figure 2b) shows a third curve C3 corresponding to another trend of the speed $v(t)$ by which a motor vehicle is driven. The force curve C4 is the trend of the reference speed $v_{REF}(t)$ obtained by low-pass filtering the speed of the third curve C3.

The driving style maintained by the driver in Figure 2b) seems more correct from the point of view of the wasted energies than the one of the driver in Figure 2a).

By calculating the index $IND_{PA}$ according to the formula (11) for the two exemplifying cases in Figure 2, according to the example, the following formulas are obtained:

$$IND_{PA} = \frac{(E_U(t1) - E_{REF}(t1))}{E_{REF}(t1)} \qquad = \frac{6 \ 0{,}2 \ kW}{6 \ 2 \ kW} = 0{,}1 \ \text{(Figure 2a)}$$

$$IND_{PA} = \frac{(E_U(t1) - E_{REF}(t1))}{E_{REF}(t1)} \qquad = \frac{0{,}2 \ kW}{2 \ kW} = 0{,}1 \ \text{(Figure 2b)}$$

Therefore, the index $IND_{PA}$ according to the formula (11), has the same result in both cases, so that does not enable to distinguish the two behaviors.

The calculation of the index IND according to the formula (9) for the two exemplifying cases, enables to obtain:

$$IND = \frac{(E_U(t1) - E_{REF}(t1))}{S_{th}} \qquad = \frac{6 \ 0{,}2 \ kW}{2 \ km} = 0.6 \ \text{(Figure 2a)}$$

$$IND = \frac{(E_U(t1) - E_{REF}(t1))}{S_{th}} \qquad = \frac{0{,}2 \ kW}{2 \ km} = 0{,}1 \ \text{(Figure 2b)}$$

Therefore, the index of the driving style IND, according to the formula (9), supplies different results in the two cases, so that the driving style in Figure 2b) is better than the one shown in Figure 2a).

According to a particular embodiment, the speed signal $v(t)$ used for calculating the consumed energy $Eu(t)$ and also, for example, for the reference energy $E_{REF}(t)$ (by low-pass filtering) can be obtained by the frequency separation technique in order to construct a speed signal which takes account of the information contents provided both by the receiver GPS 6 and the inertial accelerometer 5. Document WO-2011-101713 describes, with reference to the associated Figure 5, a possible frequency separation technique. This frequency separation technique can be implemented by an associated software module present in the processing unit 2.

Now it is made reference to the low-pass filtering of the speed signal $v(t)$ obtained by the measuring apparatus 1, and performed by the filtering module 12. Such low-pass filtering can be implemented by a low-pass filter of the first digital order with signals sampled at 10 Hz.

According to a particular embodiment, the processing unit 2 comprises an index correcting module 13 (CR-MOD) configured to modify the value of the index IND calculated by the index computing module 10 based on a correction value which takes account of the average slope associated to a path travelled by the motor vehicle. As it will be understood from the following description, the index correction module 13 is particularly advantageous when the motor vehicle moves in a mountain environment.

More particularly, the index correcting module 13, during the operation, receives from the measuring apparatus 1 (particularly from the device GPS 6) a signal representative of the altitude $alt(t)$ of the motor vehicle.

Advantageously, this altitude signal $alt(t)$ is low-pass filtered to obtain a filtered altitude signal $alt_F(t)$. Filtering enables to cancel the noise and can be performed by the index correcting module 13 itself, in the same way as was described with reference to the low-pass filtering module 12.

Moreover, from the filtered altitude signal $alt_F(t)$ the index correcting module 13 calculates an "unwrapped" altitude value $A_{UNW}$ indicating when the travelled path comprises altitude variations.

For example, the unwrapped altitude $A_{UNW}$ can be calculated by the following formula:

$$A_{UWR} = \int \left| \frac{d(alt_F(t))}{dt} \right| \qquad (12)$$

Formula (12) shows the unwrapped altitude $A_{UNW}$ obtained by the integration of the absolute value of the derivative of the filtered altitude $alt_F(t)$. Using the absolute value of the derivative does not enable the ascending and descending paths (having derivatives of opposite sign) to supply contributions which cancel with each other without concurring to the calculation of the unwrapped altitude $A_{UNW}$. The integration of formula (12) is extended between two time intervals (a time window) which can be coincident with the time interval wherein the values of the estimate index IND are given.

Moreover, the index correcting module 13 places the travelled space value Sp of the vehicle between the time instants corresponding to the ones of the unwrapped altitude $A_{UNW}$ calculation. For example, the travelled space Sp coincides with the space threshold value $S_{th}$. The travelled space Sp can be obtained by the space computing module 7, as described with reference to formula (1).

Therefore, the index correcting module 13 performs the calculation of an average slope $P_M$ given by the ratio of the unwrapped altitude $A_{UNW}$ to the corresponding travelled space Sp:

$$P_M = \frac{A_{UNW}}{S_P} \qquad (13)$$

The average slope $P_M$ (which can be also expressed as a percentage) is used by the index correcting module 13 for modifying the calculated value of the estimate index IND for taking account of the fact the motor vehicle is driven in an environment with altitude variations.

Therefore, based on the value obtained by the average slope $P_M$, the index correcting module 13 modifies the index value IND calculated by formula (9), for obtaining a corrected index $IND_{CR}$. This modification is done for reducing the value of such index as the average slope $P_M$ increases.

For example, modifying the index IND based on the average slope $P_M$ is made according to the following law:

$$IND_{CR} = IND \cdot \theta \cdot P_M \qquad (14)$$

wherein:

- $\theta$ is a tuning parameter enabling to weigh the incidence of the road slope.

With reference to the integrations of formulas (5), (8), and (12), the same considerations given with reference to formula (1) and the associated implementation by a Tustin transformation on signal sampled, for example, at 10 Hz, are still valid.

It is observed that the driving style adopted on a mountain is different from the one adopted on a flat land. Indeed, when ascending, it is more difficult to hold a uniform speed and, when descending, even though the engine brake is used, the speed variations are greater.

Correcting the driving style index, as hereinbefore described, enables to take account of the effective driving conditions and, therefore, enables to obtain a particularly reliable indication. For this reason, the Applicant observed that the index $IND_{PA}$ expressed by formula (11) in a mountain environment, is not very meaningful because it often takes values similar to each other, independently from the real behavior of the driver.

As hereinbefore discussed, the results of the estimate are also available to a monitoring station wherein further calculations and statistics are made, and reports regarding the driver behavior are generated.

It is observed that the described teachings can be applied to the field of buses transporting passengers but also to other surface motor vehicles (taxis, rented cars or lorries, for example) or to see vehicles (ships or hydrofoils, for example) or to vehicles (airplanes or helicopters, for example) for transporting passengers and/or goods.

The described system for estimating the driving style is particularly advantageous because enables to obtain an index of the driving style (IND) more realistically expressing the behavior of a driver, than what is obtainable by means of the prior art systems. Moreover, obtaining the corrected index $IND_{CR}$ enables to provide a reliable evaluation of the driving style also in a mountain environment.

**Claims**

1. Motor vehicle driving style estimating system (100) comprising:

   a measuring apparatus (1) of a motion quantity $(v(t); v_{gps}(t))$ of the motor vehicle;
   a processing apparatus (2) connected to the measuring apparatus (1) and configured to:

   define a value of a space $(S_{th})$ corresponding to a measuring path;
   calculate, based on the motion quantity, an estimate of an energy $(Eu(t))$ consumed by the motor vehicle along the measuring path defined by the space value $(S_{th})$;
   calculate an energy reference $(E_{REF}(t))$ associated to a reference behavior of the motor vehicle along the measuring path defined by the space value $(S_{th})$;
   **characterized in that** the processing apparatus is further configured to calculate an indication (IND) of the driving style dependent on a difference between the consumed energy $(Eu(t))$ and the reference energy $(E_{REF}(t))$ along the measuring path defined by the space value $(S_{th})$ and on the space value $(S_{th})$.

2. System (100) according to claim 1, wherein the processing apparatus (2) comprises:
   a calculating module of an index of the driving style (10) of said indication (IND), configured to execute the ratio between said difference and the space value.

3. System (100) according to claim 1, wherein the processing apparatus (2) comprises:
   a space calculating module (7) configured to detect, based on the motion quantity, a measuring interval during which the motor vehicle has travelled a distance equal to said space value $(S_{th})$.

4. System (100) according to claim 3, wherein:

   the measuring apparatus (1) comprises a receiver (6) of a satellite positioning system capable of supplying a speed trend $(v_{gps}(t))$ of the motor vehicle;
   the space calculating module (7) is configured to detect the measuring interval based on said motor vehicle speed trend.

5. System (100) according to claim 3, wherein the processing apparatus (2) comprises:

   a consumed energy calculating module (8) configured to estimate the motor vehicle energy $(Eu(t))$ consumed in said measuring interval;
   a reference energy calculating module (9) configured to estimate the motor vehicle reference energy $(E_{REF}(t))$ in said measuring interval.

6. System (100) according at least to one of the preceding claims, wherein the processing apparatus (2) is configured to:

   calculate the consumed energy $(Eu(t))$ based on an inertial contribution and neglecting a contribution of resistant forces;
   calculate the reference energy $(E_{REF}(t))$ based on a relative inertial contribution and neglecting a relative contribution of the resistant forces.

7. System (100) according to at least claim 5, wherein:

   the processing apparatus (2) further comprises a low-pass filter (12) configured to filter a motor vehicle speed signal supplied by the measuring apparatus and return a filtered speed signal $(v_F(t))$;
   the reference energy calculating module (9) is configured to estimate the reference energy $(E_{REF}(t))$ based on said filtered speed signal $(v_F(t))$.

8. System (100) according to at least claim 1, wherein the processing apparatus (2) further comprises:

an index correcting module (13) configured to modify said indication of the driving style based on a correction value dependent on an average slope associated to a path travelled by the motor vehicle.

9. System (100) according to at least claim 8, wherein the index correcting module (13) is configured to:

receive an altitude signal (*alt(t)*) representative of an altitude trend corresponding to a motor vehicle path;
calculating an altitude variation value from said altitude signal;
calculating the correction value obtained by a ratio between the altitude variation value and a value of a space travelled by the motor vehicle;
modifying said driving style indication based on the correction value, and obtaining a corrected index value ($IND_{CR}$).

10. Method of estimating the style of driving a motor vehicle, comprising:

measuring a vehicle motion quantity *(v(t); $v_{gps}(t)$)*;
defining a value of a space ($S_{th}$) corresponding to a measuring path;
calculating, based on the motion quantity, an estimate of an energy *(Eu(t))* consumed by the motor vehicle along the measuring path defined by the space value ($S_{th}$);
calculating a reference energy associated to a reference behavior ($E_{REF}(t)$) of the motor vehicle along the measuring path defined by the space value ($S_{th}$);
calculating an indication of the driving style (IND) dependent on a difference between the consumed energy *(Eu(t))* and the reference energy ($E_{REF}(t)$) along the measuring path defined by the space value ($S_{th}$) and on the space value ($S_{th}$).

## Patentansprüche

1. Kraftfahrzeugfahrstilschätzsystem (100), umfassend:

eine Messvorrichtung (1) einer Bewegungsgröße *(v(t); $v_{gps}(t)$)* des Kraftfahrzeugs;
eine Verarbeitungsvorrichtung (2), die mit der Messvorrichtung (1) verbunden und für Folgendes konfiguriert ist:

Definieren eines Werts eines Abstands ($S_{th}$), der einer Messstrecke entspricht;
Berechnen, basierend auf der Bewegungsgröße, einer Schätzung einer Energie *($E_U(t)$),* die durch das Kraftfahrzeug entlang der Messtrecke verbraucht wird, die durch den Abstandswert ($S_{th}$) definiert wird;
Berechnen einer Energiereferenz ($E_{REF}(t)$), die mit einem Referenzverhalten des Kraftfahrzeugs entlang der Messstrecke verknüpft ist, die durch den Abstandswert ($S_{th}$) definiert wird;
**dadurch gekennzeichnet, dass** die Verarbeitungsvorrichtung ferner konfiguriert ist, um eine Angabe (IND) des Fahrstils abhängig von einer Differenz zwischen der verbrauchten Energie *($E_U(t)$)* und der Referenzenergie *($E_{REF}(t)$)* entlang der Messstrecke, die durch den Abstandswert ($S_{th}$) definiert wird, und von dem Abstandswert ($S_{th}$) zu berechnen.

2. System (100) nach Anspruch 1, wobei die Verarbeitungsvorrichtung (2) Folgendes umfasst:
ein Berechnungsmodul eines Index des Fahrstils (10) der Angabe (IND), das konfiguriert ist, um das Verhältnis zwischen der Differenz und dem Abstandswert auszuführen.

3. System (100) nach Anspruch 1, wobei die Verarbeitungsvorrichtung (2) Folgendes umfasst:
ein Abstandsberechnungsmodul (7), das konfiguriert ist, um, basierend auf der Bewegungsgröße, ein Messintervall zu erfassen, während dessen das Kraftfahrzeug eine Distanz gleich dem Abstandswert *($S_{th}$)* zurückgelegt hat.

4. System (100) nach Anspruch 3, wobei:

die Messvorrichtung (1) einen Empfänger (6) eines Satellitennavigationssystems umfasst, der in der Lage ist, einen Geschwindigkeitstrend *($v_{gps}(t)$)* des Kraftfahrzeugs bereitzustellen;
das Abstandsberechnungsmodul (7) konfiguriert ist, um das Messintervall basierend auf dem Kraftfahrzeuggeschwindigkeitstrend zu erfassen.

5. System (100) nach Anspruch 3, wobei die Verarbeitungsvorrichtung (2) Folgendes umfasst:

ein Berechnungsmodul (8) für verbrauchte Energie, das konfiguriert ist, um die in dem Messintervall verbrauchte Kraftfahrzeugenergie $(E_U(t))$ zu schätzen;

ein Referenzenergieberechnungsmodul (9), das konfiguriert ist, um die Kraftfahrzeugreferenzenergie ($E_{REF}(t)$) in dem Messintervall zu schätzen.

**6.** System (100) nach wenigstens einem der vorhergehenden Ansprüche, wobei die Verarbeitungsvorrichtung (2) für Folgendes konfiguriert ist:

Berechnen der verbrauchten Energie $(E_U(t))$ basierend auf einem Trägheitsbeitrag und Vernachlässigen eines Beitrags von Widerstandskräften;

Berechnen der Referenzenergie ($E_{REF}(t)$) basierend auf einem relativen Trägheitsbeitrag und Vernachlässigen eines relativen Beitrags der Widerstandskräfte.

**7.** System (100) nach wenigstens Anspruch 5, wobei:

die Verarbeitungsvorrichtung (2) ferner ein Tiefpassfilter (12) umfasst, das konfiguriert ist, um ein Kraftfahrzeuggeschwindigkeitssignal zu filtern, das durch die Messvorrichtung bereitgestellt wird, und ein gefiltertes Geschwindigkeitssignal ($v_F(t)$) zurückzugeben;

das Referenzenergieberechnungsmodul (9) konfiguriert ist, um die Referenzenergie $(E_{REF}(t))$ basierend auf dem gefilterten Geschwindigkeitssignal ($v_F(t)$) zu schätzen.

**8.** System (100) nach wenigstens Anspruch 1, wobei die Verarbeitungsvorrichtung (2) ferner Folgendes umfasst: ein Indexkorrekturmodul (13), das konfiguriert ist, um die Angabe des Fahrstils basierend auf einem Korrekturwert abhängig von einer durchschnittlichen Steigung zu modifizieren, die mit einer Strecke verknüpft ist, die durch das Kraftfahrzeug zurückgelegt wird.

**9.** System (100) nach wenigstens Anspruch 8, wobei das Indexkorrekturmodul (13) für Folgendes konfiguriert ist:

Empfangen eines Höhensignals ($alt(t)$), das einen Höhentrend darstellt, der einer Kraftfahrzeugstrecke entspricht;

Berechnen eines Höhenvariationswerts aus dem Höhensignal;

Berechnen des Korrekturwerts, der durch ein Verhältnis zwischen dem Höhenvariationswert und einem Wert eines Abstands erhalten wird, der durch das Kraftfahrzeug zurückgelegt wird;

Modifizieren der Fahrstilangabe basierend auf dem Korrekturwert und Erhalten eines korrigierten Indexwerts ($IND_{CR}$).

**10.** Verfahren zum Schätzen des Fahrstils eines Kraftfahrzeugs, umfassend:

Messen einer Fahrzeugbewegungsgröße $(v(t); v_{gps}(t))$;

Definieren eines Werts eines Abstands ($S_{th}$), der einer Messstrecke entspricht;

Berechnen, basierend auf der Bewegungsgröße, einer Schätzung einer Energie ($E_U(t)$), die durch das Kraftfahrzeug entlang der Messstrecke verbraucht wird, die durch den Abstandswert ($S_{th}$) definiert wird;

Berechnen einer Referenzenergie, die mit einem Referenzverhalten ($E_{REF}(t)$) des Kraftfahrzeugs entlang der Messstrecke verknüpft ist, die durch den Abstandswert ($S_{th}$) definiert wird;

Berechnen einer Angabe des Fahrstils (IND) abhängig von einer Differenz zwischen der verbrauchten Energie ($E_U(t)$) und der Referenzenergie ($E_{REF}(t)$) entlang der Messstrecke, die durch den Abstandswert ($S_{th}$) definiert wird, und von dem Abstandswert ($S_{th}$).

## Revendications

**1.** Système d'évaluation de style de conduite d'un véhicule à moteur (100) comprenant :

un appareil de mesure (1) d'une quantité de mouvement $(v(t) ; v_{gps}(t))$ du véhicule à moteur ;

un appareil de traitement (2) connecté à l'appareil de mesure (1) et configuré pour :

définir une valeur d'un espace ($S_{th}$) correspondant à un trajet de mesure ;

calculer, sur la base de la quantité de mouvement, une estimation d'une énergie $(E_U(t))$ consommée par le véhicule à moteur le long du trajet de mesure défini par la valeur d'espace ($S_{th}$) ;
calculer une référence énergétique $E_{REF}(t)$) associée à un comportement de référence du véhicule à moteur le long du trajet de mesure défini par la valeur d'espace ($S_{th}$) ;
**caractérisé en ce que** l'appareil de traitement est en outre configuré pour calculer une indication (IND) du style de conduite en fonction d'une différence entre l'énergie consommée ($E_U(t)$) et l'énergie de référence $E_{REF}(t)$) le long du trajet de mesure défini par la valeur d'espace ($S_{th}$) et sur la valeur d'espace ($S_{th}$).

2. Système (100) selon la revendication 1, dans lequel l'appareil de traitement (2) comprend :
un module de calcul d'un indice du style de conduite (10) de ladite indication (IND), configuré pour exécuter le rapport entre ladite différence et la valeur d'espace.

3. Système (100) selon la revendication 1, dans lequel l'appareil de traitement (2) comprend :
un module de calcul d'espace (7) configuré pour détecter, sur la base de la quantité de mouvement, un intervalle de mesure pendant lequel le véhicule à moteur a parcouru une distance égale à ladite valeur d'espace ($S_{th}$).

4. Système (100) selon la revendication 3, dans lequel :

l'appareil de mesure (1) comprend un récepteur (6) d'un système de positionnement par satellite apte à fournir une tendance de vitesse ($v_{gps}(t)$) du véhicule à moteur ;
le module de calcul d'espace (7) est configuré pour détecter l'intervalle de mesure sur la base de ladite tendance de vitesse du véhicule à moteur.

5. Système (100) selon la revendication 3, dans lequel l'appareil de traitement (2) comprend :

un module de calcul d'énergie consommée (8) configuré pour estimer l'énergie du véhicule à moteur ($E_U(t)$) consommée dans ledit intervalle de mesure ;
un module de calcul d'énergie de référence (9) configuré pour estimer l'énergie de référence du véhicule à moteur ($E_{REF}(t)$) dans ledit intervalle de mesure.

6. Système (100) selon au moins l'une des revendications précédentes, dans lequel l'appareil de traitement (2) est configuré pour :

calculer l'énergie consommée ($E_U(t)$) à partir d'une contribution inertielle et en négligeant une contribution des forces résistantes ;
calculer l'énergie de référence ($E_{REF}(t)$) basée sur une contribution inertielle relative et négligeant une contribution relative des forces résistantes.

7. Système (100) selon au moins la revendication 5, dans lequel :

l'appareil de traitement (2) comprend en outre un filtre passe-bas (12) configuré pour filtrer un signal de vitesse de véhicule à moteur fourni par l'appareil de mesure et renvoyer un signal de vitesse filtré ($v_F(t)$) ;
le module de calcul d'énergie de référence (9) est configuré pour estimer l'énergie de référence ($E_{REF}(t)$) sur la base dudit signal de vitesse filtré ($v_F(t)$).

8. Système (100) selon au moins la revendication 1, dans lequel l'appareil de traitement (2) comprend en outre :
un module de correction d'indice (13) configuré pour modifier ladite indication du style de conduite en fonction d'une valeur de correction dépendant d'une pente moyenne associée à un trajet parcouru par le véhicule à moteur.

9. Système (100) selon au moins la revendication 8, dans lequel le module de correction d'index (13) est configuré pour :

recevoir un signal d'altitude ($alt(t)$) représentatif d'une tendance d'altitude correspondant à un trajet de véhicule à moteur ;
calculer une valeur de variation d'altitude à partir dudit signal d'altitude ;
calculer la valeur de correction obtenue par un rapport entre la valeur de variation d'altitude et une valeur d'espace parcouru par le véhicule à moteur ;
modifier ladite indication de style de conduite sur la base de la valeur de correction, et obtenir une valeur d'index corrigée ($IND_{CR}$).

10. Procédé d'évaluation du style de conduite d'un véhicule à moteur, comprenant :

la mesure d'une quantité de mouvement de véhicule *(v(t) ; $v_{gps}(t)$)* ;

la définition d'une valeur d'un espace ($S_{th}$) correspondant à un trajet de mesure ;

le calcul, sur la base de la quantité de mouvement, d'une estimation d'une énergie ($E_U(t)$) consommée par le véhicule à moteur le long du trajet de mesure défini par la valeur d'espace ($S_{th}$) ;

le calcul d'une énergie de référence associée à un comportement de référence ($E_{REF}(t)$) du véhicule à moteur le long du trajet de mesure défini par la valeur d'espace ($S_{th}$) ;

le calcul d'une indication du style de conduite (IND) en fonction d'une différence entre l'énergie consommée ($E_U(t)$) et l'énergie de référence ($E_{REF}(t)$) le long du trajet de mesure défini par la valeur d'espace ($S_{th}$) et sur la valeur d'espace ($S_{th}$).

# FIG.1

EP 3 235 700 B1

FIG.2

**EP 3 235 700 B1**

**REFERENCES CITED IN THE DESCRIPTION**

**Patent documents cited in the description**

- WO 2011101713 A
- EP 1780090 A
- EP 0777071 A
- EP 1498297 A